# EUROPÄISCHE PATENTSCHRIFT

(11) **EP 1 046 339 B1**
(45) Veröffentlichungstag und Bekanntmachung des Hinweises auf die Patenterteilung: **12.12.2001**
(21) Anmeldenummer: 00114900.4
(22) Anmeldetag: 18.11.1997
(51) Int. Cl.: A21C 3/02

(54) **Teigbandformer**
Dough sheeter
Dispositif de fabrication d'une bande de pâte

(30) Priorität: 21.11.1996 DE 19648238
(43) Veröffentlichungstag der Anmeldung: 25.10.2000
(62) Teilanmeldung aus: 97951223.3
(73) Patentinhaber: A. FRITSCH GMBH & CO. KG, D-97348 Markt Einersheim (DE)
(72) Erfinder: Bernhardt, Udo, 97346 Iphofen (DE)
(74) Vertreter: Götz, Georg, Dipl.-Ing.

(56) Entgegenhaltungen:
- EP-A- 0 239 154
- EP-A- 0 453 248
- GB-A- 635 015
- US-A- 1 830 426
- US-A- 1 949 105
- US-A- 3 433 181
- US-A- 3 851 088

## Beschreibung

Die Erfindung betrifft eine Vorrichtung zum Formen eines Teigbandes, mit für ungeformte Teigmasse vorgesehenen Einzugsmitteln, die einen formgebenden Einzugskanal definieren, wodurch Teigmasse zu einer Ausform-Druckwalze befördert wird, die mit wenigstens einem der Einzugsmittel und/oder einem Ausgangsförderband, das zum Abtransport des geformten Teigbandes angeordnet ist, jeweils einen für das Teigband formgebenden Walzkanal bildet, gemäß Oberbegriff des Anspruchs 1.

Teigbandformer sind bekannt (GB 652 550). Sie liefern, wenn ihnen noch ungeformte, weiche, insbesondere bereits angegarte Teigmasse eingegeben wird, eine Teigbandformung, deren Qualität oftmals gewisse Nachteile aufweist: Leicht entstehen Löcher und Einrisse auf der Teigoberfläche, und auch das Teigband ist in seiner Dicke schwankend.

Aus EP-A-0 453 248 ist ein Verfahren und eine Vorrichtung zur Herstellung kontinuierlicher Brotteigbänder bekannt, wobei unter einem Spalt zwischen zwei Auslaßollen ein geneigtes Förderband angeordnet ist. Hierdurch wird für das Teigband ein geneigter Förderpfad am Ausgang der Teig-Einzugseinrichtung gebildet. Eine ähnliche Anordnung eines Schräg-Förderbandes am Spalt-Ausgang zwischen zwei Teigwalzen ist aus GB-A-2 292 540 ersichtlich. In DE-A-195 10 724 ist ein waagrechtes Zuführ-Förderband unterhalb eines Teigtrichters angeordnet, der durch ein Paar zylindrischer Trichterwalzen begrenzt ist, welche fortlaufend Teigmaterial auf das Zuführ-Förderband abgeben. Von dort wird das Teigmaterial zu einer Walzeinrichtung weiterbefördert, wobei auf die Teig-Oberseite mittels eines Mehlers Mehl gestreut wird.

US-A-5 124 163 lehrt ein Verfahren zur Streckung von Teig, bei dem in einem aus zwei gegenüberliegenden Walzen gebildeten Einzugskanal eine Vorformung von Teig stattfindet, der aus einem Vorratstrichter für ungeformten Teig zugeführt wird. Vertikal darunter ist ein zweiter nachformender Walzkanal in Serie nachgeordnet.

Der Einzugskanal und der davon weitgehend unabhängig arbeitende, nachformende Walzkanal sind durch Sensoren voneinander abgegrenzt, welche die Dikke des Teiges messen, bevor dieser in den nachformenden Walzkanal gelangt. Abhängig vom Ausgangssignal dieser Sensoren wird die Geschwindigkeit der den Einzugskanal begrenzenden Walzen gesteuert.

US-A- 5 079 014 offenbart ein Teig-Streckverfahren, bei dem ebenfalls ein Einzugskanal und ein nachformender Walzkanal horizontal hintereinander angeordnet sind. Es findet in analoger Weise eine Steuerung der Geschwindigkeiten beider Kanäle (Einzugskanal, nachformender Walzkanal) abhängig von einer Sensorik mit nachgeschaltetem Computer statt. Der Sensor mißt ebenfalls die Dicke bzw. Breite des Teigkanals zwischen den beiden Kanälen.

Aus EP-A-0 239 154 ist eine Auswalzvorrichtung zur Bildung eines kontiniuierlichen Teigbandes etwa der eingangs genannten Art bekannt. Danach sind sowohl ein Einzugskanal als auch ein Walzkanal angeordnet, letzterer mit einer Ausform-Druckwalze. Diese bildet mit einer Walze des genannten Einzugskanals einen weiteren, formgebenden Walzspalt. Unmittelbar danach hängt der geformte Teigstrang vertikal nach unten, ohne jede Abstützung.

Demgegenüber liegt der Erfindung die Aufgabe zugrunde, einen Teigbandformer der eingangs genannten Art so weiter zu entwickeln, daß die Teigstruktur einschließlich bereits entstandener Gärungsstrukturen möglichst wenig beeinträchtigt

Zur Lösung dieser Problematik wird nach der Erfindung die im Patentanspruch 1 angegebene Vorrichtung vorgeschlagen. Vorteilhafte Ausführungsbeispiele ergeben sich aus den Unteransprüchen. Mit dem Stützorgan kann das bereits in dem an sich bekannten Teil des Teigbandformers geformte Teigband in Förderrichtung geführt, an die Druckwalze gehalten und insbesondere in den Spalt oder Walzkanal zwischen der Druckwalze und dem Ausgangs-Förderband eingeleitet werden. Erschütterungen für die geformte Teigmasse sind dabei weitgehend vermieden. Das Teigband wird im Ausgangsbereich der Vorrichtung allumfassend geführt und getragen, und Belastungen durch Dehnungen, Streckungen und Erschütterungen sind im wesentlichen unterbunden.

In Weiterbildung der Erfindung sind das Stützorgan bzw. der Stützkanal unmittelbar nach dem oder einem der Walzkanäle angeordnet. Damit läßt sich gewährleisten, daß das geformte Teigband sicher und erschütterungsfrei auf die Oberfläche des Ausgangs-Förderbandes zu liegen kommt, bevor es durch den Spalt zwischen der Druckwalze und dem Ausgangs-Förderband hindurchbefördert wird.

Mit besonderem Vorteil ist das Stützorgan mit einem Stützförderband realisiert, das zur Bildung des Stützkanals zusammen mit der Druckwalze wenigstens einen der Druckwalze gegenüberliegenden und mit der Druckwalze in gleicher Förderrichtung laufenden Förderbandabschnitt aufweist. Mit der Wahl eines Förderbandes als Stützorgan läßt sich der dem Abstützen des Teigbandes dienende Förderabschnitt verhältnismäßig lang und weit ausführen, so daß ein zuverlässiges und sicheres Halten des Teigbandes an die Druckwalze und Führen zum Ausgangs-Förderband ermöglicht ist.

Damit der Stützkanal an unterschiedliche Dimensionen, insbesondere Dicken, Arten, Beschaffenheiten, Teigdurchsatzmengen usw. des geformten Teigbandes angepaßt werden kann, ist eine vorteilhafte Weiterbildung der Erfindung dahingehend vorgesehen, daß das Stützorgan und/oder die Druckwalze mit einer Stelleinrichtung zur Lageveränderung bzw. Positionierung gekoppelt sind. Damit ist es möglich, den Stützkanal in seiner Größe, insbesondere Breite, entsprechend der Dicke und/oder des Massendurchsatzes des geformten Teigbandes flexibel zu variieren. Die Anwendungsflexibilität läßt sich auch nach einer anderen Ausbildung der Erfindung erhöhen, wonach dem Stützförderband und/oder der Druckwalze je eine separate Antriebseinrichtung zugeordnet ist, die extern einstellbar ist. Damit lassen sich einerseits die Stützfunktion und andererseits die Druckfunktion in der erfindungsgemäßen Vorrichtung voneinander unabhängig gestalten, und es kann speziellen Anforderungen je nach Teigart, Produktionsgeschwindigkeit u.a. individuell Rechnung getragen werden.

Erfindungsgemäß sind das Stützorgan und die Druckwalze in ihrer Relativlage zueinander so angeordnet, daß sie an unterschiedlichen Längs-Breitseiten des Teigbandes angreifen. Dies fördert die nach obiger Erfindungsaufgabe angestrebte Wirkung, eine umfassende Halterung und Führung des Teigbandes zu erreichen, ohne daß dieser Streckungen oder sonstigen, schädlichen mechanischen Belastungen ausgesetzt werden würde.

Gleichartige, vorteilhafte Wirkungen werden mit einer Ausbildung der Erfindung erzielt, wonach das Stützorgan mit einer Mehlzuführeinrichtung versehen und/oder verbunden ist. Die Anordnung des an sich bekannten, sogenannten "Mehlers" ist dabei so getroffen, daß Mehl von der Mehl-Streueinrichtung auf das Teigband und/oder Ausgangsförderband übertragen wird. Die vorteilhafte Wirkung besteht darin, daß ein Haften des geformten Teigbandes am Stützorgan, insbesondere am Stützförderband, und damit ein belastendes Strecken oder gar Reißen beim Ablösen vom Stützorgan vermieden ist.

Bei bisher bekannten Teigbandformen tritt ein entsprechendes Problem auf: Das Teigband haftet leicht an der Druckwalze im Übergangsbereich zum Ausgangs-Förderband; beim Ablösen von der Druckwalze reißt die Teigoberfläche leicht auf, was zu einer Beeinträchtigung oder gar Zerstörung der geformten Teigbandstruktur und von dessen Oberfläche führt.

Zur Lösung dieses Problems wird nach einer Ausbildung der Erfindung vorgeschlagen, daß die Druckwalze in Wirkungsverbindung mit einer Mehlzuführeinrichtung derart angeordnet ist, daß Mehl von der Streueinrichtung auf die Druckwalze und/oder das Teigband und/oder das Ausgangsförderband übertragen wird. Dadurch läßt sich ein Aufreißen der Teig-oberfläche beim Ablösen von der Druckwalze verhindern. Ein weiterer vorteilhafter Effekt besteht in der Bemehlung der der Druckwalze zugeordneten Teigbandseite, was für die weitere Teigverarbeitung vorteilhaft oder wünschenswert sein kann. Die genannten vorteilhaften Wirkungen gelten entsprechend für die oben angesprochene Kombination des Stützorgans bzw. des Stütz-Förderbandes mit ebenfalls einer Mehlzuführeinrichtung.

Der genannte Erfindungsgedanke in der Kombination der Druckwalze mit einem Mehler läßt sich dadurch besonders praxisgerecht umsetzen, daß um die Druckwalze ein Förderband gelegt wird, welches dem Transport des von der Mehlzuführeinrichtung erhaltenen Mehls zum Teigband dient.

Der Konstruktions- und Komponenten-Aufwand läßt sich mit einer vorteilhaften Ausbildung der Erfindung dahingehend vermindern, daß die Einzugsmittel durch Einzugswalzen gebildet werden, welche zu ihrer Drehung mit einer einzigen, gemeinsamen Antriebseinrichtung gekoppelt sind. Dabei entsteht auch der Vorteil, daß sich die Synchronisation der gegenüberliegenden Einzugswalzen, die den Einzugskanal bilden, leicht bewerkstelligen läßt.

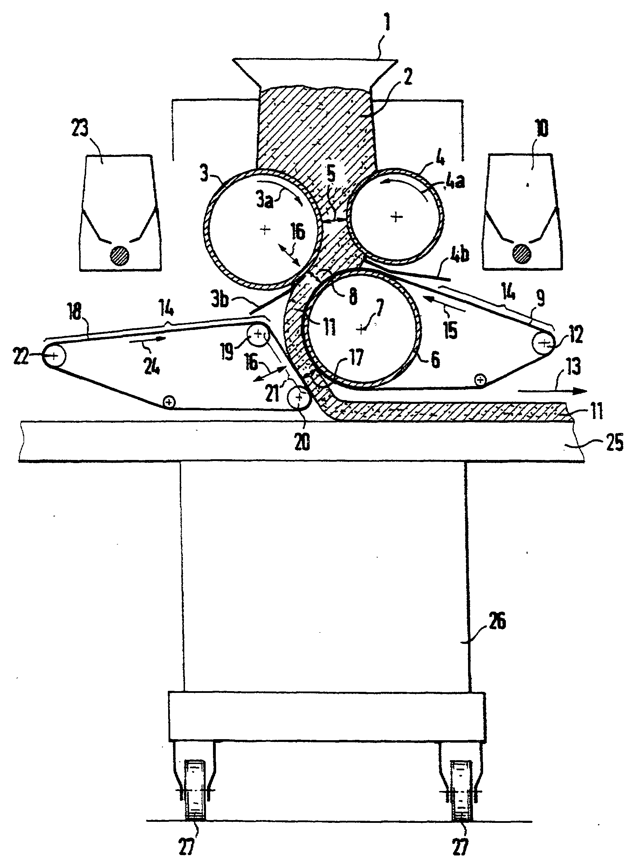

Weitere Einzelheiten, Merkmale, Vorteile und Wirkungen auf der Basis der Erfindung ergeben sich aus den Ansprüchen sowie der nachfolgenden Beschreibung eines bevorzugten Ausführungsbeispiels anhand der Zeichnung. Diese zeigt eine schematische Seitenansicht eines erfindungsgemäßen Bandförderers:

Gemäß schematischer, zeichnerischer Darstellung ist ein Trichter 1 mit noch ungeformter Teigmasse 2 darin oberhalb zweier, gegenüberliegender, unterschiedlich großer Einzugswalzen 3, 4 angeordnet. Deren Abstand voneinander ist auf die benötigte Teigstärke einstellbar. Die größere Einzugswalze wird in einer Drehrichtung 3a entsprechend dem Uhrzeigersinn, und die kleinere Einzugswalze 4 in einer Drehrichtung 4a entgegen dem Uhrzeigersinn angetrieben. Zum Antrieb kann ein beiden gemeinsamer Antriebsmotor (nicht gezeichnet) mit entsprechendem Umkehrgetriebe verwendet werden. In dem Bereich, in dem die beiden Einzugswalzen 3, 4 einander gegenüberliegen und den Einzugskanal 5 begrenzen, wird die Teigmasse 2 jeweils in die gleiche Förderrichtung nach unten in Richtung auf die Druckwalze 6 bewegt. In dem Einzugskanal 5 findet bereits eine erste Formgebung für die Teigmasse 2 aus dem Trichter 1 statt.

Die Druckwalze 6 ist unterhalb des Einzugskanals 5 gegenüber dessen Mittellinie mit ihrer Walzen-Zylinderachse 7 (senkrecht zur Zeichenebene verlaufend) so weit horizontal versetzt angeordnet, daß sich eine Schrägstellung gegenüber dem Einzugskanal 5 ergibt. Dadurch kann der weitere Förderweg für die Teigmasse 2 durch einen formgebenden Walzkanal 8 fortgesetzt werden. Dieser ist durch die linke, größere Einzugswalze 3 und die schräg darunter (nach rechts etwas versetzt) liegende Druckwalze 6 begrenzt und schließt sich unmittelbar an den Einzugskanal 5 an. Um Teigmasse vollständig von den Einzugswalzen 3, 4 zu lösen, greifen auf deren mit Teigmasse in Berührung kommenden Mantelflächen Abstreifer 3b, 4b in an sich bekannter Weise an.

Bei der Druckwalze 6 wird das unerwünschte Anhaften von Teigmasse 2 mit einem gleichzeitig Ausform-Funktionen erfüllenden Mehlförderband 9 verhindert, in dem dieses von einem Mehler 10 ausgestreute Mehlpartikel auf eine Seite des Teigbandes 11 befördert, das gerade im Walzkanal 8 zwischen der größeren Einzugswalze 3 und der Druckwalze 6 geformt wird. Dazu umfaßt bzw. umgibt das Mehlförderband 9 die Außenmantelfläche der Druckwalze 6 zumindest so weit; als diese auf die Teigmasse 2 einwirkt. Mittels einer Umlenkrolle 12, die in horizontaler Ausgangs-Förderrichtung 13 in eine Position unterhalb des Mehlers 10 versetzt ist, wird beim Mehl-Förderband ein Mehl-Aufnahmeabschnitt 14 geschaffen, auf den der Mehler 10 Mehlpartikel abstreuen kann. Da die Umlaufrichtung 15 des Mehl-Förderbandes 9 dem Uhrzeigersinn entgegengesetzt ist bzw. der Drehrichtung 4a der kleineren Einzugswalze 4 entspricht, wird Mehl zur zugewandten Seite des geformten Teigbandes 11 gefördert. Gemäß gezeichnetem Beispiel läßt sich der größeren Einzugswalze 3 eine Verstellbewegung 16 mittels eines (nicht gezeichneten) Stellantriebs erteilen, um auch den Walzkanal 8 in seiner Breite und damit in der Art seiner Formgebung zu beeinflussen.

An den Walzkanal 8 schließt sich ein Stützkanal 17 an, der einerseits aus der Druckwalze 6 und andererseits mit einem Stütz-Förderband 18 als Stützorgan begrenzt bzw. gebildet ist. Dazu weist das Stützförderband 18 einen besonders zwischen zwei Umlenkrollen 19, 20 gebildeten Stützförderabschnitt 21 auf, der unmittelbar der Druckwalze 6 bzw. dem dieses umgebenden Mehl-Förderband 9 schräg gegenüberliegt. Dazu sind die beiden Umlenkrollen 19, 20 schräg untereinander sowie insgesamt unterhalb der größeren Einzugswalze 3 angeordnet. Um den Stützkanal 17 in seiner Breite anpassen und variieren zu können, ist das Stützförderband um die obere, der beiden genannten Umlenkrollen 19 so schwenkbar gelagert, daß der Stützförderabschnitt 21 in seinem Abstand gegenüber der Druckwalze 6 verändert werden kann. Dazu kann ein (nicht gezeichneter) Stellantrieb dienen, welcher dem Stützförderband 18 und insbesondere dem Stützförderabschnitt 21 Stellbewegungen 16 zur Druckwalze 6 oder von der Druckwalze 6 wegführend erteilt, ähnlich wie bei der größeren Einzugswalze 3. Nach Verlassen des Walzspaltes 8 zwischen der Einzugswalze 3 und der Druckwalze 6 kann es leicht zu einer Volumen-Expansion des Teigbandes 11 mit Verbreiterung oder einer Verdickung kommen; dies läßt sich mit einer entsprechenden Stellbewegung 16 des Stützförderbandes auffangen bzw. kompensieren.

Das Stützförderband 18 weist ebenfalls einen Mehl-Aufnahmeabschnitt 14 auf, der mittels einer etwa horizontal entgegen der Ausgangs-Förderrichtung 13 versetzten Antriebsrolle 22 geschaffen ist. Darüber befindet sich ebenfalls ein zweiter Mehler 23, von dem Mehlpartikel auf das Stützförderband 18 gelangen können. Da dessen Umlaufsinn bzw. Förderumlaufrichtung 24 dem Uhrzeigersinn bzw. der Drehrichtung der größeren Einzugswalze 3a entspricht, ergibt sich im Zusammenwirken mit der Druckwalze 6 eine Förderrichtung zu einem horizontal erstreckten Ausgangs-Förderband 25, welches aus dem Stützkanal 17 gelangendes Teigband die Ausgangsförderrichtung 13 erteilt. Aus dem zweiten Mehler 23 ausgestreute Mehlpartikel werden von dem Aufnahmeabschnitt 14 des Stützförderbandes 18 zu der Seite des Teigbandes 11 übertragen, mit der das Teigband 11 auf dem Ausgangs-Förderband 25 zu liegen kommt. Die entgegengesetzte, nach oben gerichtete und frei bleibende Teigbandseite ist über das die Druckwalze 6 umfassende Mehl-Förderband 9 mit Mehlpartikel aus dem ersten Mehler 10 beaufschlagt.

Die gesamte Vorrichtung ist von einem Chassis 26 getragen, das auf Bodenrollen 27 gefahren werden kann.

### Bezugszeichenliste

- 1: Trichter
- 2: Teigmasse
- 3: Einzugswalze
- 3a: Drehrichtung
- 3b: Abstreifer
- 4: Einzugswalze
- 4a: Drehrichtung
- 4b: Abstreifer
- 5: Einzugskanal
- 6: Druckwalze
- 7: Walzen-Zylinderachse
- 8: Walzkanal
- 9: Mehl-Förderband
- 10: Mehler
- 11: Teigband
- 12: Umlenkrolle
- 13: Ausgangs-Förderrichtung
- 14: Aufnahmeabschnitt
- 15: Förder-Umlaufrichtung
- 16: Stellbewegung
- 17: Stützkanal
- 18: Stützförderband
- 19: Umlenkrolllen
- 20: Umlenkrollen
- 21: Stützförderabschnitt
- 22: Antriebsrolle
- 23: Mehler
- 24: Umlaufsinn
- 25: Ausgangsförderband
- 26: Chassis
- 27: Bodenrolle

## Patentansprüche

1. Vorrichtung zum Formen eines Teigbandes (11), mit für ungeformte Teigmasse (2) vorgesehenen Einzugsmitteln, die einen formgebenden Einzugskanal (5) definieren, wodurch Teigmasse (2) zu einer Ausform-Druckwalze (6) befördert wird, die mit wenigstens einem der Einzugsmittel einen für das Teigband formgebenden Walzkanal (8) bildet, **gekennzeichnet durch** ein der Druckwalze (6) derart zugeordnetes Stützorgan (18,21), daß es zusammen mit der Druckwalze (6) einen das Teigband (11) haltenden und/oder nachformenden Stützkanal (17) bildet, der sich unmittelbar an den Walzkanal (8) anschließt, wobei das Stützorgan (18,21) und die Druckwalze (6) in ihrer Relativlage zueinander so angeordnet sind, daß sie an gegenüberliegenden Breitseiten des Teigbandes (11) angreifen.

2. Vorrichtung nach Anspruch 1, **dadurch gekennzeichnet, daß** das Stützorgan (18,21) beziehungsweise der Stützkanal (17) unmittelbar nach dem Walzkanal (8) angeordnet ist.

3. Vorrichtung nach Anspruch 1 oder 2, **dadurch gekennzeichnet, daß** das Stützorgan (18,21) mit einem Stütz-Förderband (18) gebildet ist, das zur Bildung des Stützkanals (17) wenigstens einen der Druckwalze (6) gegenüberliegenden und mit dieser gleichsinnigen Förderbandabschnitt (21) aufweist.

4. Vorrichtung nach Anspruch 3, **dadurch gekennzeichnet, daß** der Förderbandabschnitt (21) um wenigstens eine Antriebs- und/oder Umlenkrolle (19) des Förderbandes (18) des Stützorgans verschwenkbar gelagert ist.

5. Vorrichtung nach Anspruch 3 oder 4, **dadurch gekennzeichnet, daß** dem Stützförderband (18) und/oder der Druckwalze (6) je eine separate Antriebseinrichtung zugeordnet ist, die extern einstellbar ist.

6. Vorrichtung nach einem der vorangehenden Ansprüche, **dadurch gekennzeichnet, daß** das Stützorgan (18,21) und/oder die Druckwalze (6) mit einer Stelleinrichtung zur Verstellung (16) des Stützkanals (17) in seiner Größe, insbesondere Breite, verbunden sind.

7. Vorrichtung nach Ansprüche 6 und 4 oder 5, **dadurch gekennzeichnet, daß** die Stelleinrichtung zur Lageverstellung des der Druckwalze (6) gegenüberliegenden Förderbandabschnitts (21) in Angriff gebracht und/oder angeordnet ist.

8. Vorrichtung nach einem der vorangehenden Ansprüche, **dadurch gekennzeichnet, daß** das Stützorgan (18,21) zum Angriff und/oder Einwirken auf die Teigband-Seite angeordnet ist, mit dem das Teigband auf dem Ausgangsförderband (25) aufliegt.

9. Vorrichtung nach Anspruch 8, **dadurch gekennzeichnet, daß** das Stützorgan (18,21) unterhalb des Einzugskanals (5) beziehungsweise der Einzugsmittel und/oder ganz oder teilweise unterhalb der Druckwalze (6) angeordnet ist.

10. Vorrichtung nach einem der vorangehenden Ansprüche, **dadurch gekennzeichnet, daß** das Stützorgan (18,21) in Wirkungsverbindung mit einer Mehlzuführeinrichtung (23) derart angeordnet ist, daß Mehl von der Zuführeinrichtung (23) auf das Teigband (11) und/oder Ausgangsförderband (25) übertragen wird.

11. Vorrichtung nach Anspruch 3 und 10, **dadurch gekennzeichnet, daß** die Mehlzuführeinrichtung (23) dem Stütz-Förderband unmittelbar gegenüberliegend, insbesondere oberhalb desselben, angeordnet ist.

12. Vorrichtung nach einem der vorangehenden Ansprüche, **dadurch gekennzeichnet, daß** das Stützorgan (18,21) der Druckwalze (6) direkt gegenüberliegend angeordnet ist, wobei der Stützkanal (17) vom Stützorgan (18,21) und von der Druckwalze (6) beidseits begrenzt wird.

13. Vorrichtung nach einem der vorangehenden Ansprüche, **dadurch gekennzeichnet, daß** die Druckwalze (6) mit einem Ausgangs-Förderband (25), das zum Abtransport (13) des geformten Teigbandes (11) angeordnet ist, einen formgebenden Walzkanal bildet.

14. Vorrichtung nach einem der vorangehenden Ansprüche, **dadurch gekennzeichnet, dass** die Druckwalze (6) in Wirkungsverbindung mit einer Mehlzuführeinrichtung (10) derart angeordnet ist, daß Mehl von der Zuführeinrichtung (10) auf die Druckwalze (6) und/oder das Teigband (11) und/oder das Ausgangsförderband (25) übertragen wird, und ein die Druckwalze (6) umfassendes Mehl-Förderband (9) angeordnet ist, dem die Mehlzuführeinrichtung (10) zugeordnet ist.

15. Vorrichtung nach Anspruch 14, **dadurch gekennzeichnet, daß** dem Mehl-Förderband (9) die Mehlzuführeinrichtung (10) vertikal gegenüberliegt.

16. Vorrichtung nach einem der vorangehenden Ansprüche, mit einem Ausgangs-Förderband (25), das zum Abtransport (13) des geformten Teigbandes (11) angeordnet ist, **dadurch gekennzeichnet, daß** die Druckwalze (6) zum Angriff und/oder Einwirken auf die Teigband-Seite angeordnet ist, welche bei auf dem Ausgangsförderband (25) liegendem Teigband (11) dessen freie Oberseite bildet.

17. Vorrichtung nach einem der vorangehenden Ansprüche, **dadurch gekennzeichnet, daß** die Einzugsmittel mittels Einzugswalzen (3,4) realisiert sind, welche zu ihrer Drehung (3a,4a) mit einer gemeinsamen Antriebseinrichtung gekoppelt sind.

18. Vorrichtung nach einem der vorangehenden Ansprüche, **dadurch gekennzeichnet, daß** die Einzugsmittel mittels Einzugswalzen (3,4) realisiert sind, an welchen je ein Teig-Abstreifelement (3b,4b) in Angriff gebracht ist.

## Claims

1. Apparatus for shaping a dough strip (11), with draw-in means which are provided for unshaped dough (2) and which define a shaping draw-in channel (5), through which dough (2) is conveyed to a shaping pressure roll (6) which, together with at least one of the draw-in means, forms a rolling channel (8) for shaping the dough strip, **characterised by** a support member (18, 21) which is associated with the pressure roll (6) such that, together with the pressure roll (6), it forms a support channel (17) which holds and/or post-shapes the dough strip (11) and which directly adjoins the rolling channel (8), wherein the support member (18, 21) and the pressure roll (6) are disposed in a position relative to one another such that they act on opposite broad sides of the dough strip (11).

2. Apparatus according to Claim 1, **characterised in that** the support member (18, 21) or the support channel (17) is disposed directly after the rolling channel (8).

3. Apparatus according to Claim 1 or 2, **characterised in that** the support member (18, 21) is formed with a support conveyor belt (18) which, in order to form the support channel (17), comprises at least one conveyor belt portion (21) lying opposite the pressure roll (6) and moving in the same direction as the latter.

4. Apparatus according to Claim 3, **characterised in that** the conveyor belt portion (21) is mounted so as to be pivotable about at least one driving and/or deflection roller (19) of the conveyor belt (18) of the support member.

5. Apparatus according to Claim 3 or 4, **characterised in that** a respective separate driving device, which can be externally set, is associated with the support conveyor belt (18) and/or the pressure roll (6).

6. Apparatus according to any one of the preceding Claims, **characterised in that** the support member (18, 21) and/or the pressure roll (6) are connected to a regulating device for adjusting (16) the support channel (17) in terms of its size, in particular width.

7. Apparatus according to Claims 6 and 4 or 5, **characterised in that** the regulating device is applied and/or disposed to adjust the position of the conveyor belt portion (21) lying opposite the pressure roll (6).

8. Apparatus according to any one of the preceding Claims, **characterised in that** the support member (18, 21) is disposed to be applied to and/or act on the dough strip side with which the dough strip lies on the delivery conveyor belt (25).

9. Apparatus according to Claim 8, **characterised in that** the support member (18, 21) is disposed below the draw-in channel (5) or the draw-in means and/or completely or partly below the pressure roll (6).

10. Apparatus according to any one of the preceding Claims, **characterised in that** the support member (18, 21) is disposed in operative connection with a flour feed device (23) such that flour is transferred from the feed device (23) onto the dough strip (11) and/or delivery conveyor belt (25).

11. Apparatus according to Claims 3 and 10, **characterised in that** the flour feed device (23) is disposed so as to lie directly opposite the support conveyor belt, in particular above the latter.

12. Apparatus according to any one of the preceding Claims, **characterised in that** the support member (18, 21) is disposed so as to lie directly opposite the pressure roll (6), wherein the support channel (17) is defined on both sides by the support member (18, 21) and the pressure roll (6).

13. Apparatus according to any one of the preceding Claims, **characterised in that**, together with a delivery conveyor belt (25), which is disposed to carry away (13) the shaped dough strip (11), the pressure roll (6) forms a shaping rolling channel.

14. Apparatus according to any one of the preceding Claims, **characterised in that** the pressure roll (6) is disposed in operative connection with a flour feed device (10) such that flour is transferred from the feed device (10) onto the pressure roll (6) and/or the dough strip (11) and/or the delivery conveyor belt (25), and a flour conveyor belt (9) is disposed so as to encompass the pressure roll (6), with which belt the flour feed device (10) is associated.

15. Apparatus according to Claim 14, **characterised in that** the flour feed device (10) lies vertically opposite the flour conveyor belt (9).

16. Apparatus according to any one of the preceding Claims, with a delivery conveyor belt (25) which is disposed to carry away (13) the shaped dough strip (11), **characterised in that** the pressure roll (6) is disposed to be applied to and/or act on the dough strip side which, when the dough strip (11) is lying on the delivery conveyor belt (25), forms the free top side of the latter.

17. Apparatus according to any one of the preceding Claims, **characterised in that** the draw-in means are implemented by means of draw-in rolls (3, 4) which are coupled to a common driving device in order to be rotated (3a, 4a).

18. Apparatus according to any one of the preceding Claims, **characterised in that** the draw-in means are implemented by means of draw-in rolls (3, 4), to which a respective dough scraping element (3b, 4b) is applied.

## Revendications

1. Dispositif pour façonner une bande de pâte (11), comportant des moyens d'introduction prévus pour une masse de pâte informe (2), qui définissent un canal d'introduction (5) à effet modelant, par lequel la masse de pâte (2) est transportée jusqu'à un cylindre de pression et de modelage (6) qui, avec au moins l'un des moyens d'introduction, forme un canal de laminage respectif (8) à effet modelant pour la bande de pâte, **caractérisé par** un organe de soutien (18, 21) associé au cylindre de pression (6) d'une manière telle, qu'il forme, conjointement avec le cylindre de pression (6), un canal de soutien (17) maintenant la bande de pâte (11) et/ou parachevant sa mise en forme, lequel canal de soutien se raccorde directement au canal de laminage (8), l'organe de soutien (18, 21) et le cylindre de pression (6) étant disposés l'un par rapport à l'autre, dans leur positionnement relatif, de telle sorte qu'ils s'appliquent sur les faces larges opposées de la bande de pâte (11).

2. Dispositif selon la revendication 1, **caractérisé en ce que** l'organe de soutien (18, 21) ou le canal de soutien (17) est disposé immédiatement en aval du canal de laminage (8).

3. Dispositif selon la revendication 1 ou 2, **caractérisé en ce que** l'organe de soutien (18, 21) est formé avec une bande transporteuse de soutien (18) qui, pour la formation du canal de soutien (17), présente au moins un tronçon de bande transporteuse (21) placé en regard du cylindre de pression (6) et mobile dans le même sens que celui-ci.

4. Dispositif selon la revendication 3, **caractérisé en ce que** le tronçon de bande transporteuse (21) est monté pivotant autour d'au moins un rouleau d'entraînement et/ou un rouleau libre de renvoi (19) de la bande transporteuse (18) de l'organe de soutien.

5. Dispositif selon la revendication 3 ou 4, **caractérisé en ce qu'**à la bande transporteuse de soutien (18) et/ou au cylindre de pression (6) est associé un système d'entraînement respectif particulier, qui peut être réglé de l'extérieur.

6. Dispositif selon l'une des revendications précédentes, **caractérisé en ce que** l'organe de soutien (18, 21) et/ou le cylindre de pression (6) sont reliés à un système de réglage permettant l'ajustement (16) des dimensions, en particulier de la largeur, du canal de soutien (17).

7. Dispositif selon les revendications 6 et 4 ou 5, **caractérisé en ce que** le système de réglage est mis en action et/ou est agencé de manière à ajuster le positionnement du tronçon de bande transporteuse (21) placé en regard du cylindre de pression (6).

8. Dispositif selon l'une des revendications précédentes, **caractérisé en ce que** l'organe de soutien (18, 21) est positionné de façon à s'appliquer et/ou intervenir sur la face de la bande de pâte, par laquelle la bande de pâte repose sur la bande transporteuse de sortie (25).

9. Dispositif selon la revendication 8, **caractérisé en ce que** l'organe de soutien (18, 21) est positionné au-dessous du canal d'introduction (5) ou des moyens d'introduction et/ou en totalité ou en partie au-dessous du cylindre de pression (6).

10. Dispositif selon l'une des revendications précédentes, **caractérisé en ce que** l'organe de soutien (18, 21) est placé en liaison de coopération avec un distributeur de farine (23), d'une manière telle que de la farine soit transférée du distributeur (23) sur la bande de pâte (11) et/ou la bande transporteuse de sortie (25).

11. Dispositif selon les revendications 3 et 10, **caractérisé en ce que** le distributeur de farine (23) est positionné de façon à se trouver juste en face de la bande transporteuse de soutien, en particulier au-dessus de celleci.

12. Dispositif selon l'une des revendications précédentes, **caractérisé en ce que** l'organe de soutien (18, 21) est positionné de façon à se trouver directement en regard du cylindre de pression (6), le canal de soutien (17) étant alors délimité sur ses deux côtés par l'organe de soutien (18, 21) et par le cylindre de pression (6).

13. Dispositif selon l'une des revendications précédentes, **caractérisé en ce que** le cylindre de pression (6) forme, avec une bande transporteuse de sortie (25) qui est positionnée de façon à assurer l'évacuation (13) de la bande de pâte façonnée (11), un canal de laminage à effet modelant.

14. Dispositif selon l'une des revendications précédentes, **caractérisé en ce que** le cylindre de pression (6) est placé en liaison de coopération avec un distributeur de farine (10), d'une manière telle que de la farine soit transférée du distributeur (10) sur le cylindre de pression (6) et/ou la bande de pâte (11) et/ou la bande transporteuse de sortie (25), et il est disposé une bande transporteuse de farine (9) entourant le cylindre de pression (6), à laquelle le distributeur de farine (10) est associé.

15. Dispositif selon la revendication 14, **caractérisé en ce que** le distributeur de farine (10) est positionné verticalement en regard de la bande transporteuse de farine (9).

16. Dispositif selon l'une des revendications précédentes, comportant une bande transporteuse de sortie (25) qui est positionnée de façon à assurer l'évacuation (13) de la bande de pâte façonnée (11), **caractérisé en ce que** le cylindre de pression (6) est positionné de façon à venir s'appliquer et/ou intervenir sur la face de la bande de pâte, qui constitue la face supérieure libre de cette dernière lorsque la bande de pâte (11) se trouve sur la bande transporteuse de sortie (25).

17. Dispositif selon l'une des revendications précédentes, **caractérisé en ce que** les moyens d'introduction sont matérialisés au moyen de cylindres d'introduction (3, 4) qui, en vue de leur rotation (3a, 4a), sont accouplés à un système d'entraînement commun.

18. Dispositif selon l'une des revendications précédentes, **caractérisé en ce que** les moyens d'introduction sont matérialisés au moyen de cylindres d'introduction (3, 4), contre chacun desquels un élément racleur de pâte (3b, 4b) est mis en appui.
